Europäisches Patentamt

European Patent Office

Office européen des brevets

(19)

(11) Numéro de publication : **0 494 821 B1**

## (12) FASCICULE DE BREVET EUROPEEN

(45) Date de publication du fascicule du brevet :
**27.07.94 Bulletin 94/30**

(51) Int. Cl.⁵ : **B23K 35/02, C23C 4/04**

(21) Numéro de dépôt : **92400041.7**

(22) Date de dépôt : **08.01.92**

(54) **Cordon de rechargement comportant des fibres ou au moins un fil de renforcement.**

(30) Priorité : **09.01.91 FR 9100192**

(43) Date de publication de la demande :
**15.07.92 Bulletin 92/29**

(45) Mention de la délivrance du brevet :
**27.07.94 Bulletin 94/30**

(84) Etats contractants désignés :
**AT BE CH DE DK ES FR GB GR IT LI LU NL PT SE**

(56) Documents cités :
**FR-A- 1 026 223**
**FR-A- 1 443 142**
**FR-A- 2 081 169**
**FR-A- 2 174 752**
**FR-A- 2 255 991**
**US-A- 4 625 095**

(73) Titulaire : **SOCIETE NOUVELLE DE METALLISATION INDUSTRIES SNMI
50, rue du Mourelet,
Z.I. de Courtine
F-84008 Avignon (FR)**

(72) Inventeur : **Ducos, Maurice
Route d'Uchaux
F-84550 Mornas (FR)**
Inventeur : **Tell, Robert
Cité du Vélodrome,
Bât.A3
F-84500 Bollene (FR)**

(74) Mandataire : **Mongrédien, André et al
c/o BREVATOME
25, rue de Ponthieu
F-75008 Paris (FR)**

EP 0 494 821 B1

## Description

La présente invention concerne des cordons de rechargement, plus particulièrement destinés à la réalisation de revêtement par rechargement utilisant une source extérieure d'énergie calorifique telle qu'une flamme ou un arc électrique, par exemple un chalumeau oxyacétylénique, un chalumeau ou des torches de soudage TIG (Transfer inert gas) ou tout autre moyen de soudage par plasma ou bombardement électronique.

De façon plus précise, elle concerne un cordon souple destiné à être utilisé comme matériau de rechargement, qui comprend une âme interne formée d'une poudre minérale agglomérée par un liant organique et une gaine externe en substance organique.

Des cordons de rechargement de ce type sont décrits par exemple dans les documents FR-A-1 443 142, FR-A- 90 379, FR-A- 2 081 169 et FR-A-2 255 991.

Lorsque ces cordons souples sont utilisés dans un chalumeau, le liant organique de l'âme et la gaine organique extérieure se consument dans la source de chaleur, tandis que la poudre forme sur le support qui la reçoit un revêtement uniforme, de grande pureté et de bonnes caractéristiques métalliques. Pour assurer la cohésion entre les grains de poudre minérale lors de l'élimination du liant organique et avant la fusion des grains, on peut ajouter à l'âme une faible proportion d'un composé minéral tel que du silicate de sodium. On peut aussi ajouter un composé minéral dans la gaine, ce qui permet d'incorporer dans l'âme des grains céramiques, partiellement infusibles, en maintenant leur cohésion jusqu'à la fusion de la partie fusible de l'âme.

Cependant, avec les cordons de rechargement du type soudure, particulièrement denses, comportant par exemple des particules de carbure de tungstène ayant une granulométrie élevée dans une matrice métallique, il se produit un phénomène indésirable lorsque l'on interrompt le rechargement , alors que la gaine externe et le liant ont été éliminés à l'extrémité du cordon,sur une longueur de 15 à 25mm. En effet, dans ce cas l'extrémité qui est dépourvue de gaine et de liant organique déjà brûlés, se détache du reste du cordon sous l'effet de son propre poids, en raison du manque de liant entre les particules infusibles. Cette extrémité qui s'est détachée, est irrécupérable car elle est trop petite pour être réutilisée et ceci constitue une perte de matière non négligeable.

Ceci se produit en particulier lorsque l'opérateur interrompt l'opération de rechargement pour pousser le cordon dans le fourreau isolant qui lui permet de placer le cordon en position sur la pièce à revêtir sans se brûler, ou lorsque l'opérateur a terminé un revêtement et retire le cordon de la source de chaleur.

La présente invention a précisément pour objet un cordon souple de rechargement qui permet de pallier cet inconvénient.

Selon l'invention le cordon de rechargement comporte une âme formée d'une poudre minérale agglomérée par un liant organique et une gaine externe en substance organique,et il se caractérise en ce que l'âme est renforcée par des fibres discontinues ou par au moins un fil continu de 50 à 200μm de diamètre en matériau non fragile, fondant ou brûlant à une température supérieure ou égale à 500°C, lesdites fibres ou ledit(lesdits) fil(s) permettant d'éviter que l'extrémité du cordon de rechargement ne se détache lorsque celle-ci est dépourvue de liant organique et de gaine sur une longueur de 15 à 25mm.

Selon l'invention, le matériau non fragile constituant les fibres ou le(s) fil(s) est choisi de façon à ne pas perturber l'opération de rechargement et à ne pas modifier de façon néfaste les caractéristiques physiques et métallurgiques du revêtement qui sera déposé à partir de ce cordon. En particulier, ce matériau ne doit pas réagir avec la poudre minérale utilisée.

De préférence, le matériau des fibres ou des fils est un métal ou alliage soudable, par exemple de l'acier, du cuivre ou du nickel.

La présence de ces fibres discontinues ou de fils continus à l'intérieur de l'âme permet de solidariser la poudre minérale en l'absence de liant et de gaine en substance organique. Aussi, lorsque l'on interrompt le rechargement alors que l'extrémité du cordon est dépourvue de gaine et de liant organique, ceux-ci ayant déjà été brûlés dans le dispositif de rechargement, on obtient une solidarisation suffisante entre cette extrémité du cordon et le reste de l'âme, et l'on évite ainsi que cette extrémité se détache et soit perdue.

Selon un premier mode de réalisation de l'invention, on utilise des fibres discontinues. La longueur de ces fibres discontinues doit être suffisante pour permettre un ancrage de l'extrémité du cordon dépourvu de liant et de gaine dans le reste de l'âme. Cependant, la longueur des fibres discontinues ne doit pas être trop grande pour ne pas perturber les opérations de fabrication de l'âme, en particulier le mélange de la poudre minérale avec le liant organique.

Généralement, on utilise des fibres ayant une longueur de 10 à 50mm, par exemple de 30mm.

Le diamètre des fibres discontinues doit être suffisant pour qu'elles présentent une résistance mécanique appropriée pour supporter le poids de l'extrémité du cordon à la température de combustion du liant organique et de la gaine, mais il ne doit pas être trop important pour ne pas nuire à la flexibilité du cordon. Généralement, on utilise des fibres ayant un diamètre de 50 à 200μm.

2

De même, la teneur en fibres de l'âme doit être suffisante pour que l'ensemble des fibres puisse supporter le poids de l'extrémité du cordon. Cependant, cette teneur ne doit pas non plus être trop élevée pour ne pas perturber les opérations de fabrication de l'âme, en particulier le mélange de la poudre minérale et du liant organique, et ne pas nuire à la flexibilité.

Cette teneur en fibres dépend de la valeur de la section transversale du cordon, de la densité de la poudre minérale utilisée et de la nature des fibres utilisées.

Pour un diamètre de l'âme de l'ordre de 6,35mm, les fibres peuvent par exemple représenter de 0,20 à 0,50% en poids de l'âme lorsque la densité de la poudre minérale est d'environ 7,8 et que les fibres sont en acier inoxydable ou en cuivre.

Dans les deux modes de réalisation du cordon de rechargement de l'invention, la poudre minérale constituant l'âme peut être de différents types. A titre d'exemple, elle peut être constituée d'alliages métalliques à base de nickel ou de cobalt, d'alliages du type brasures telles que des brasures au nickel ou au cuivre, d'alliages à base de fer qui peuvent être employés seuls ou avec des charges de matériaux céramiques tels que des carbures, des nitrures, des siliciures et des oxydes.

Dans ce dernier cas, le matériau céramique peut être présent dans la poudre sous la forme de particules ayant différentes granulométries, parmi lesquelles des granulométries élevées allant par exemple jusqu'à 6mm.

La poudre minérale constituant l'âme peut aussi comprendre des additifs en matériau inorganique, par exemple un composé minéral permettant d'assurer la cohésion des particules de poudre jusqu'à leur fusion complète, à la température de combustion du liant organique, comme il est décrit dans FR-A-2 081 169. Toutefois, avec les fibres discontinues ou les fils continus de l'invention, on peut éviter l'emploi d'un tel composé.

Dans l'âme interne la poudre minérale qui peut comprendre une poudre métallique et des particules céramiques, est agglomérée par un liant organique comprenant en outre éventuellement un plastifiant et/ou d'autres additifs.

Les liants organiques utilisés peuvent être en particulier des liants cellulosiques, par exemple l'hydroxyéthylméthylcellulose, la méthylcellulose, la carboxyméthylcellulose, ou des polymères tels que l'alcool polyvinylique et l'acide polyméthacrylique.

Les agents plastifiants utilisés peuvent être par exemple le stéarate d'ammonium, le stéarate de diglycol, la glycérine.

Dans le premier mode de réalisation de l'invention, on peut préparer l'âme, en mélangeant la poudre minérale avec les fibres discontinues de renforcement et le liant organique, par exemple au moyen de malaxeurs à pâles conventionnels de type classique. On obtient ainsi une pâte que l'on peut mettre sous la forme de cordon par filage. La gaine externe en substance organique est préparée à partir d'une pâte similaire contenant la substance organique et l'on peut fabriquer le cordon gainé par cofilage des deux pâtes.

Dans le second mode de réalisation de l'invention, on peut préparer l'âme en utilisant également une pâte formée de la poudre minérale mélangée au liant organique que l'on soumet à un filage en entraînant le ou les fils de renforcement continus dans la pâte filée. La gaine externe peut être préparée à partir d'une pâte similaire contenant la substance organique et mise en place autour de l'âme par cofilage.

Les substances organiques utilisées pour réaliser la gaine externe peuvent être des dérivés cellulosiques comme l'hydroxyéthylméthylcellulose.

D'autres caractéristiques et avantages de l'invention apparaîtront mieux à la lecture des exemples suivants donnés bien entendu à titre illustratif et non limitatif, en référence au dessin annexé sur lequel
- la figure 1 représente schématiquement un dispositif de cofilage d'un cordon conforme au premier mode de réalisation de l'invention, et
- la figure 2 représente schématiquement un dispositif de cofilage d'un cordon de rechargement conforme au second mode de réalisation de l'invention.

## Exemple 1.

Cet exemple concerne la réalisation d'un cordon de rechargement conforme au premier mode de réalisation de l'invention dont l'âme est en cermet à base d'alliage Ni-Cr-B-Si et de particules de carbure de tungstène renforcée par des fibres de cuivre.

L'alliage Ni-Cr-B-Si comprend 68% de Ni, 17% de Cr, 3% de B et 2% de Si.

On prépare tout d'abord une première pâte ayant la composition suivante :

3

| | |
|---|---|
| - alliage Ni-Cr-B-Si | 100 parties en poids |
| - carbure de tungstène fondu (diamètre moyen des particules 1,6mm) | 110 "  "  " |
| - carbure de tungstène (diamètre moyen des particules 0,1mm) | 50 "  "  " |
| - fibres de verre | 1,1 "  "  " |
| - liant | 5,5 "  "  " |
| - plastifiant | 0,5 "  "  " |
| - fibres de cuivre (diamètre de 100μm et longueur de 15mm) | 1,4 "  "  " |

On prépare cette pâte en malaxant les différents constituants avec le liant (hydroxyéthylméthyl cellulose), puis on ajoute la quantité suffisante d'eau et on malaxe énergiquement pendant 15min.

On prépare une seconde pâte devant servir à former la gaine en malaxant le mélange ayant la composition suivante : 100 parties en poids d'hydroxyéthylméthyl cellulose en poudre, 10 parties en poids de silicate de sodium, 4 parties en poids de triéthanolamine et une quantité suffisante d'eau.

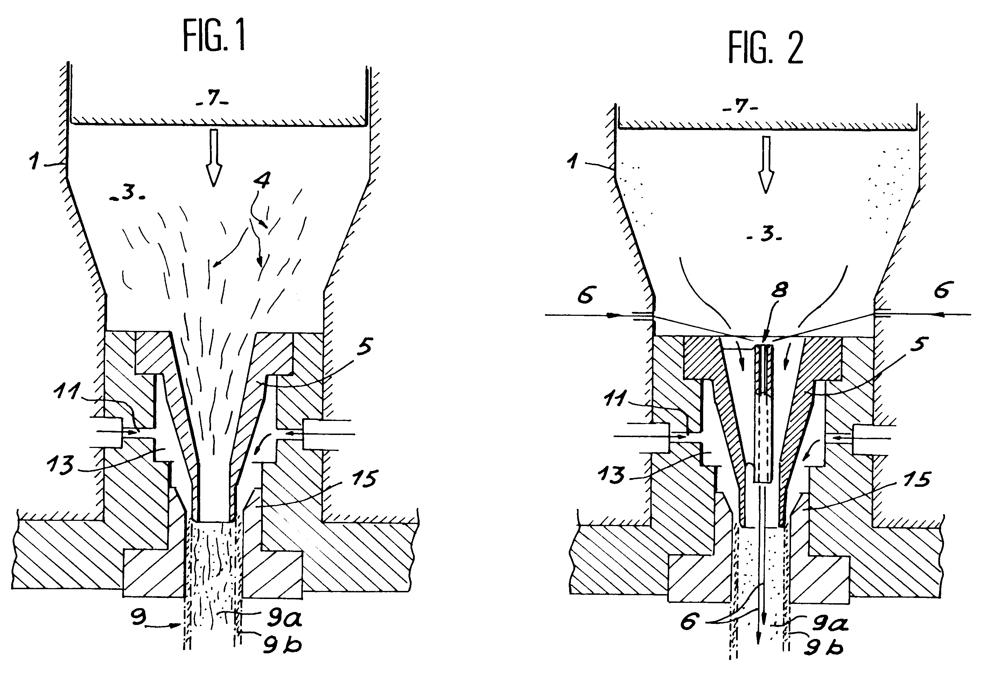

On réalise ensuite un cofilage de ces deux pâtes dans la presse à filer représentée sur la figure 1.

Sur cette figure, on voit que la presse comprend un pot de presse (1) dans lequel on introduit la première pâte (3) contenant les fibres discontinues (4), qui est forcée dans la première buse conique (5) sous l'action du piston (7) pour former l'âme (9a) du cordon (9). La deuxième pâte est introduite par les conduites (11) dans l'espace (13) puis forcée dans la seconde buse (15) disposée autour de la première buse (5) pour former autour de l'âme (9a), la gaine organique (9b).

On obtient ainsi un cordon renforcé par des fibres discontinues en cuivre comportant une gaine en hydroxyéthylméthyl cellulose.

Lorsqu'on utilise ce cordon pour réaliser un rechargement avec un chalumeau oxyacétylénique, on n'observe pas le phénomène de détachement de l'extrémité du cordon lorsqu'on interrompt l'opération de revêtement.

**Exemple 2.**

On prépare un cordon de rechargement en suivant le même mode opératoire que dans l'exemple 1, mais en utilisant pour la fabrication de la première pâte :

| | |
|---|---|
| - alliage Ni-Cr-B-Si | 100 parties en poids |
| - carbure de tungstène (diamètre moyen 1,6mm) | 95 "  "  " |
| - carbure de tungstène (diamètre moyen 0,1mm) | 46 "  "  " |
| - liant : 5,1 parties en poids, | |
| - fibres d'acier inoxydable NFZ2CN18-10 (diamètre de 120μm et longueur de 30mm) | "  "  " |

4

On utilise la même seconde pâte que dans l'exemple 1 pour préparer la gaine externe.

Avec le cordon ainsi obtenu, on n'observe pas le phénomène de détachement de l'extrémité du cordon lorsque l'on interrompt l'opération de rechargement.

**Exemple 3.**

Cet exemple concerne la réalisation d'un cordon de rechargement conforme au second mode de réalisation de l'invention qui comprend une âme en cermet à base d'alliage cuivre (CuZnNi) et de carbure de tungstène fritté renforcée par 2 fils continus d'acier. L'alliage CuZnNi comprend 50% de cuivre, 40% de zinc et 10% de nickel.

On prépare tout d'abord une première pâte ayant la composition suivante :
- alliage CuZnNi ; 100 parties en poids,
- carbure de tungstène : 160 parties en poids (diamètre moyen 3,17mm)
- liant organique : 5,5 parties en poids.

On prépare cette première pâte en malaxant les différents constituants avec 4% en poids du liant (hydroxyéthylméthyl cellulose) puis on ajoute 10% en poids de l'hydroxyéthylméthyl cellulose de Rhodopas 956 et enfin la quantité suffisante d'eau. On malaxe énergiquement pendant une heure.

On prépare une seconde pâte devant servir à former la gaine en malaxant le mélange ayant la composition suivante :
- 100 parties en poids d'hydroxyéthylméthyl cellulose,
- 10 parties en poids de Rhodopas, et
- la quantité suffisante d'eau.

On file ensuite ces deux pâtes dans la presse à filer représentée sur la figure 2.

Cette presse est identique à celle de la figure 1 et on a de ce fait utilisé les mêmes références pour désigner les éléments communs aux deux presses, mais la presse de la figure 2 comprend de plus un moyen d'introduction des 2 fils de renforcement (6) au niveau de la première buse interne (5) et un tube de guidage (8) de ces fils dans la première pâte.

Dans cet exemple, on a utilisé deux fils en acier inoxydable 2rCND18-10 d'un diamètre de 100µm.

Dans ce cas, on introduit au préalable les 2 fils (6) dans le'pot de presse en les guidant dans le tube (8) et en les tirant pour qu'ils dépassent légèrement à la sortie de la buse externe (15) puis on place la première pâte dans le pot de presse (1) et on introduit la deuxième pâte dans l'espace (13) pour effectuer le cofilage des deux pâtes qui entraînent les deux fils (6) dans l'âme interne (9a) sortant de la presse.

On obtient ainsi un cordon renforcé par deux fils continus en acier. Lors d'une utilisation du cordon pour le rechargement d'une pièce, on n'observe pas le phénomène de détachement de l'extrémité du cordon lorsqu'on interrompt l'opération de revêtement.

Cependant, la présence de ces deux fils de diamètre très faible ne permet pas d'assurer une souplesse et une cohésion suffisantes du cordon en l'absence de la gaine externe en substance organique.

**Revendications**

1. Cordon de rechargement (9) comportant une âme (9a) formée d'une poudre minérale agglomérée par un liant organique et une gaine externe (9b) en substance organique, caractérisé en ce que l'âme (9a) est renforcée par des fibres discontinues (4) ou par au moins un fil continu (6) d'un diamètre de 50 à 200µm en métal ou alliage soudable non fragile, fondant ou brûlant à une température supérieure ou égale à 500°C, et permettant d'éviter que l'extrémité du cordon de projection ne se détache lorsque celle-ci est dépourvue de liant organique et de gaine sur une longueur de 15 à 25mm.

2. Cordon selon la revendication 1, caractérisé en ce que les fibres (4) ou le(s) fil(s) (6) sont en acier inoxydable ou en cuivre.

3. Cordon selon l'une quelconque des revendications 1 et 2, caractérisé en ce que les fibres (4) ont une longueur de 10 à 50mm.

4. Cordon selon l'une quelconque des revendications 1 à 3, caractérisé en ce que le diamètre des fibres (4) est de 50 à 200µm.

5. Cordon selon l'une quelconque des revendications 1 et 2, caractérisé en ce que l'âme (9a) est renforcée

5

par 1 à 3 fils continus (6).

6. Cordon selon l'une quelconque des revendications 1 à 5, caractérisé en ce que la poudre minérale de l'âme (9a) est constituée d'une poudre de métal ou d'alliage métallique et de particules d'au moins un matériau céramique.

7. Cordon selon la revendication 6, caractérisé en ce que la poudre minérale est formée d'une poudre d'alliage de nickel-chrome-bore-silicium, de particules de carbure de tungstène et de fibres de verre.

8. Cordon selon la revendication 6, caractérisé en ce que la poudre minérale est formée d'une poudre d'alliage de nickel-chrome-bore-silicium,et de particules de carbure de tungstène.

9. Cordon selon l'une quelconque des revendications 3 et 4, caractérisé en ce que les fibres (4) représentent de 0,20 à 0,50% en poids de l'âme (9a).

## Patentansprüche

1. Nachladefaden (9), der umfaßt einen Kern (9a), der aus einem mineralischen Pulver gebildet ist, das durch ein organisches Bindemittel und eine äußere Hülle (9b) aus organischer Substanz gebunden wird, dadurch gekennzeichnet, daß der Kern (9a) durch unterbrochene Fasern (4) oder durch zumindest ein fortlaufendes Garn (6) mit einem Durchmesser von 50 bis 200 μm aus Metall oder einer nicht brüchigen schweißbaren Legierung verstärkt ist, das bei einer Temperatur von 500°C oder darüber schmilzt oder verbrennt, und es ermöglicht, es zu verhindern, daß das Ende des gespritzen Fadens sich ablöst, wenn es auf eine Länge von 15 bis 25 mm kein organisches Bindemittel mehr aufweist.

2. Faden nach Anspruch 1, dadurch gekennzeichnet, daß die Fasern (4) oder das (die) Garn (Garne) (6) aus nicht oxidierbarem Stahl oder aus Kupfer bestehen.

3. Faden nach einem der Ansprüche 1 und 2, dadurch gekennzeichnet, daß die Fasern (4) eine Länge von 10 bis 50 mm aufweisen.

4. Faden nach einem der Ansprüche 1 bis 3, dadurch gekennzeichnet, daß der Durchmesser der Fasern (4) zwischen 50 und 200 μm beträgt.

5. Faden nach einem der Ansprüche 1 und 2, dadurch gekennzeichnet, daß der Kern (9a) durch 1 bis 3 fortlaufende Garne (6) verstärkt ist.

6. Faden nach einem der Ansprüche 1 bis 5, dadurch gekennzeichnet, daß das mineralische Pulver des Kerns (9a) aus einem Pulver aus Metall oder einer metallischen Legierung und aus Partikeln aus mindestens einem keramischen Material bestehen.

7. Faden nach Anspruch 6, dadurch gekennzeichnet, daß das mineralische Pulver aus einem Pulver der Legierung Nickel-Chrom-Bor-Silizium, aus Wolfram-Karbidpartikeln und Glasfasern gebildet ist.

8. Faden nach Anspruch 6, dadurch gekennzeichnet, daß das mineralische Pulver aus einem Pulver der Legierung Nickel-Chrom-Bor-Silizium und aus Wolfram-Karbidpartikeln gebildet ist.

9. Faden nach einem der Ansprüche 3 und 4, dadurch gekennzeichnet, daß die Fasern (4) zwischen 0,20 und 0,50 Gewichtsprozent des Kerns (9a) darstellen.

## Claims

1. Recharging bead (9) having a core (9a) formed from a mineral powder agglomerated by an organic binder and an outer sheath (3b) made from an organic material, characterized in that the core (9a) is reinforced by discontinuous fibres (4) or by at least one continuous wire (6) having a diameter of 50 to 200 μm and constituted by a non-fragile weldable alloy or metal, which melts or burns at a temperature equal to or above 500°C and which makes it possible to avoid the end of the bead from becoming detached when it is freed from the organic binder and sheath over a length of 15 to 25 mm.

2. Bead according to claim 1, characterized in that the fibres (4) or wire/wires (6) are made from stainless steel or copper.

3. Bead according to either of the claims 1 and 2, characterized in that the fibres (4) are 10 to 50 mm long.

4. Bead according to any one of the claims 1 to 3, characterized in that the diameter of the fibres (4) is 50 to 200 μm.

5. Bead according to either of the claims 1 and 2, characterized in that the core (9a) is reinforced by 1 to 3 continuous wires (6).

6. Bead according to any one of the claims 1 to 5, characterized in that the mineral powder of the core (9a) is constituted by a metal alloy or metal powder and particles of at least one ceramic material.

7. Bead according to claim 6, characterized in that the mineral powder is formed by a nickel-chromium-boron-silicon alloy powder, tungsten carbide particles and glass fibres.

8. Bead according to claim 6, characterized in that the mineral powder is formed by a nickel-chromium-boron-silicon alloy powder and tungsten carbide particles.

9. Bead according to either of the claims 3 and 4, characterized in that the fibres (4) represent 0.20 to 0.50% by weight of the core (9a).

FIG. 1

FIG. 2

EP 0 494 821 B1